# EUROPEAN PATENT SPECIFICATION

(11) **EP 3 882 502 B1**
(45) Date of publication and mention of the grant of the patent: **17.09.2025**
(21) Application number: 21158400.8
(22) Date of filing: 22.02.2021
(51) Int. Cl.: F16L 11/04, F16L 11/08, F16L 11/133

(54) **MARINE HOSE**
SCHWIMMFÄHIGER SCHLAUCH
TUYAU SOUPLE MARIN

(30) Priority: 18.03.2020 JP 2020048320
(43) Date of publication of application: 22.09.2021
(73) Proprietor: The Yokohama Rubber Co., Ltd., Hiratsuka-shi, Kanagawa 254-8601 (JP)
(72) Inventor: TAMADA, Yoshinori, Hiratsuka-shi, Kanagawa 254-8601 (JP)
(74) Representative: Grünecker Patent- und Rechtsanwälte PartG mbB

(56) References cited:
- EP-A1- 0 611 104
- GB-A- 1 503 502
- JP-A- 2008 196 538

## Description

### Technical Field

The present invention relates to a marine hose and particularly relates to a marine hose that can ensure sufficient impact absorption performance while reducing the burden on a reinforcing layer that absorbs an impact when a main reinforcing layer group is damaged.

### Background Art

A so-called double carcass type is known as the structure of a marine hose that transports a fluid such as a crude oil by connecting an offshore tanker and a land facility or the like. In the double carcass type marine hose, a main reinforcing layer group (an inner carcass layer group) and an outer carcass layer group are layered in order between an inner surface rubber layer and a cover layer. Even when the main reinforcing layer group is damaged, if the outer carcass layer group is healthy, the fluid flowing out from the main reinforcing layer group can be prevented from leaking to the outside of the hose by the outer carcass layer group.

When the main reinforcing layer group is damaged, the internal pressure acting on the outer carcass layer group may rapidly increase, and thus the outer carcass layer group needs to be designed to withstand the impact at that time. Thus, the outer carcass layer group is configured by layering a considerable number of carcass layers, and it is difficult to reduce the number of layered carcass layers. Accordingly, this is also disadvantageous in terms of making the marine hose light weight.

In view of this, a double carcass type marine hose that makes the marine hose light weight and low cost while improving the impact absorption performance of the outer carcass layer group is known (see Patent Document 1). The marine hose known in Patent Document 1 solves the problems described above by devising the specification of a carcass cord used in the outer carcass layer group. However, in the double carcass type marine hose, since high impact absorption performance is required for the outer carcass layer group, there is a limit in ensuring sufficient impact absorption performance only by devising the specification of the carcass cord. Thus, the number of carcass layers of the outer carcass layer group needs to be increased to some extent.

### Citation List

### Patent Literature

Patent Document 1: JP 2013-249932 A
Patent Document 2: EP0611104A1
Patent Document 3: GB1503502A Summary of Invention

### Technical Problem

An object of the present invention is to provide a marine hose that can ensure sufficient impact absorption performance while reducing the burden on the reinforcing layer for absorbing the impact when the main reinforcing layer group is damaged.

### Solution to Problem

In order to achieve the object described above, a marine hose of an embodiment of the present invention is a marine hose of a floating type, according to independent claim 1, including: a main reinforcing layer group and a buoyant layer layered in order from an inner circumferential side between an inner surface rubber layer and a cover layer, wherein an auxiliary reinforcing layer group that assists the main reinforcing layer group is layered on an outer circumferential side of the buoyant layer.

### Advantageous Effects of Invention

According to an embodiment of the present invention, since the auxiliary reinforcing layer group that reinforce the main reinforcing layer group is layered on the outer circumferential side of the buoyant layer, the buoyant layer is interposed between the main reinforcing layer group and the auxiliary reinforcing layer group. Thus, the impact force generated by a fluid flowing through a flow path when the main reinforcing layer group is damaged is absorbed and alleviated to some extent by the buoyant layer. Thus, sufficient impact absorption performance can be ensured while reducing the impact force acting on the auxiliary reinforcing layer group. Accordingly, since it is not necessary to make the auxiliary reinforcing layer group have excessively strong specification, the number of auxiliary reinforcing layers that constitute the auxiliary reinforcing layer group can be reduced and the marine hose can be made light weight.

### Brief Description of Drawings

FIG. 1 is an explanatory diagram illustrating a marine hose according to an embodiment of the present invention.
FIG. 2 is an explanatory diagram illustrating a portion of the marine hose in FIG. 1 enlarged in a longitudinal cross-sectional view.
FIG. 3 is an explanatory diagram illustrating a transverse cross-section structure of the marine hose in a cross-sectional view taken along A-A of FIG. 2.
FIG. 4 is an explanatory diagram illustrating auxiliary reinforcing layers by cutting out a portion of the marine hose in FIG. 1.
FIG. 5 is an explanatory diagram illustrating a modified example of the auxiliary reinforcing layers in FIG. 4.
FIG. 6 is an explanatory diagram illustrating another embodiment, not forming part of the invention, of a portion of the marine hose enlarged in a cross-sectional view.
FIG. 7 is an explanatory diagram illustrating yet another embodiment of a portion of the marine hose enlarged in a cross-sectional view.

### Description of Embodiments

A marine hose according to embodiments of the present invention will be described below with reference to the drawings.

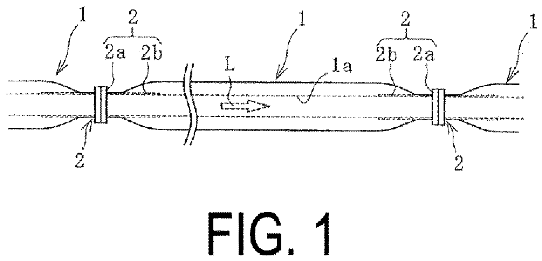

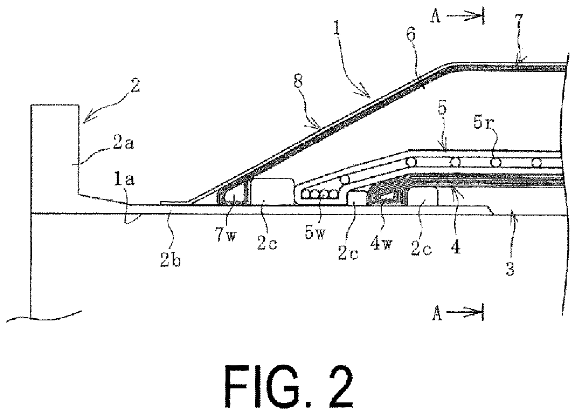

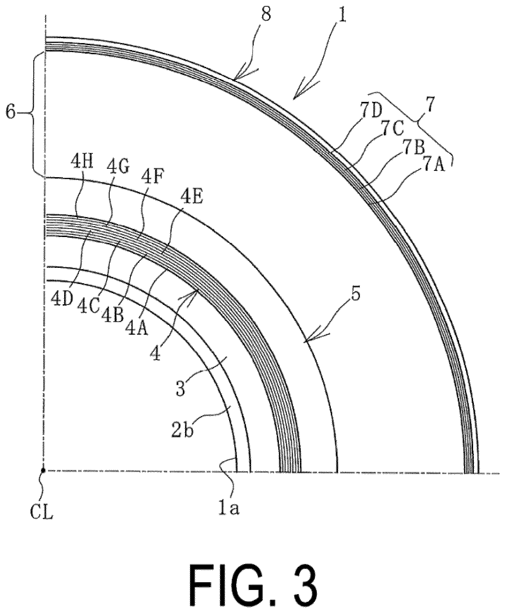

An embodiment of a marine hose 1 according to FIGS. 1 to 3 is provided with connecting end portions 2 at both ends in the longitudinal direction for connecting to other marine hoses 1. Each connecting end portion 2 includes a nipple 2b extending in the longitudinal direction of the marine hose 1 and a flange 2a joined to one end of the nipple 2b in the longitudinal direction. Generally, about 8 to 20 marine hoses 1 are connected and used together. A dot-dash line CL in the drawing is a center line extending in the hose longitudinal direction through the center of cross-section of the marine hose 1. Note that in FIGS. 3, 6, and 7, a range of 1/4 of the transverse cross-section of the marine hose 1 is described, and the other range not described (a range of 3/4) also has the identical structure.

Between each nipple 2b at both ends of the marine hose 1, an inner surface rubber layer 3, a main reinforcing layer group 4, a body wire layer 5, a buoyant layer 6, an auxiliary reinforcing layer group 7, and a cover layer 8 are coaxially layered in order, on the outer circumferential side of a cylindrical flow path 1a as a center (i.e., around the center line CL as the center). The main reinforcing layer group 4, the body wire layer 5, and the auxiliary reinforcing layer group 7 are fixed to the nipple 2b by nipple wires 4w, 5w, 7w at respective ends and a fixing ring 2c protruding from the outer circumferential surface of the nipple 2b.

The inner circumferential surface of the inner surface rubber layer 3 serves as the flow path 1a for a fluid L. Examples of the fluid L include crude oil, gasoline, LPG, and the like. An appropriate material is used for the inner surface rubber layer 3 depending on the type of the fluid L. In a case where the fluid L is crude oil or the like, the inner surface rubber layer 3 is formed of nitrile rubber or the like having excellent oil resistance.

The main reinforcing layer group 4 is configured by layering a plurality of main reinforcing layers 4A to 4H. The main reinforcing layers 4A to 4H are not limited to eight layers, and the required number of layers is set as appropriate, for example, about four to thirty layers. That is, the main reinforcing layer group 4 has a multilayer structure with the main reinforcing layers 4A to 4H. Each of the main reinforcing layers 4A to 4H is formed by bunching a plurality of rubber coated reinforcing cords side by side.

In each of the main reinforcing layers 4A to 4H, the plurality of reinforcing cords extends to be inclined at a predetermined angle with respect to the center line CL. The main reinforcing layers layered adjacent to each other in a vertical direction are disposed such that the inclination directions of the reinforcing cords are directions opposite to each other and intersect with each other. As the reinforcing cord, a resin fiber cord made from polyester, polyketone, aramid, vinylon, nylon, or the like or a steel cord, which is usually used in the marine hose, is used.

Each of the main reinforcing layers 4A to 4H is covered with a thin rubber layer for adhesion, and the main reinforcing layers layered adjacent to each other are adhered via the thin rubber layer. Furthermore, the inner circumferential surface of the main reinforcing layer group 4 and the outer circumferential surface of the inner surface rubber layer 3 are brought into contact and adhered to each other.

The body wire layer 5 is formed by spirally winding a reinforcing wire 5r around outer circumferential rubber of the main reinforcing layer group 4 at predetermined intervals. The body wire layer 5 is also covered with a rubber layer for adhesion. Note that the body wire layer 5 can be discretionarily provided. The body wire layer 5 can also be disposed inside the main reinforcing layer group 4.

The buoyant layer 6 is formed of a material such as sponge rubber, polyurethane foam or the like that exhibits buoyancy to float the marine hose 1 above the sea. Thus, the marine hose 1 is a floating hose used in a state of floating in water and is not a submarine hose used in a submerged state. The layer thickness of the buoyant layer 6 (portions other than both longitudinal end portions) varies depending on the size, the required buoyancy, and the like of the marine hose 1, but is, for example, about not less than 60 mm and not greater than 300 mm.

The cover layer 8 is formed of a non-water-permeable material such as rubber and has a line pattern or the like having excellent visibility on the surface of the cover layer 8. An appropriate material having excellent weather resistance, scratch resistance, or the like is used for the cover layer 8.

The auxiliary reinforcing layer group 7 is reinforcing layers that support the main reinforcing layer group 4 and resists the impact force (internal pressure) generated in the marine hose 1 when the main reinforcing layer group 4 is damaged. The auxiliary reinforcing layer group 7 is formed by layering a plurality of auxiliary reinforcing layers 7A to 7D. The auxiliary strong layers 7A to 7D are not limited to four layers, and the required number of layers (plurality of layers) is set as appropriate, for example, about not less than two layers and not greater than six layers. That is, the auxiliary reinforcing layer group 7 has a multilayer structure with the auxiliary reinforcing layers 7A to 7D. Each of the auxiliary reinforcing layers 7A to 7D is formed by bunching a plurality of rubber coated reinforcing cords 7r side by side.

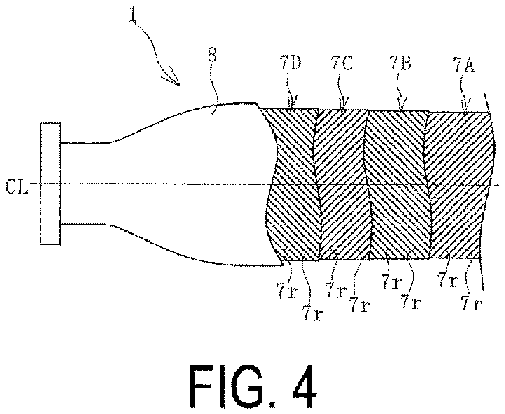

As illustrated in FIG. 4, the plurality of reinforcing cords 7r extends to be inclined at a predetermined angle with respect to the center line CL in each of the auxiliary reinforcing layers 7A to 7D. The auxiliary reinforcing layers layered adjacent to each other in a vertical direction are disposed such that the inclination directions of the reinforcing cords 7r are directions opposite to each other and intersect with each other. That is, the auxiliary reinforcing layers 7A to 7D and the main reinforcing layers 4A to 4H have a substantially identical multilayer structure. As the reinforcing cord 7r, a resin fiber cord made from polyester, polyketone, aramid, vinylon, nylon, or the like or a steel cord, which is usually used in the marine hose, is used.

Each of the auxiliary reinforcing layers 7A to 7D is covered with a thin rubber layer for adhesion, and the auxiliary reinforcing layers layered adjacent to each other are adhered via the thin rubber layer. Additionally, the inner circumferential surface of the auxiliary reinforcing layer group 7 and the outer circumferential surface of the buoyant layer 6 are brought into contact and adhered to each other, and the outer circumferential surface of the auxiliary reinforcing layer group 7 and the inner circumferential surface of the cover layer 8 are brought into contact and adhered to each other.

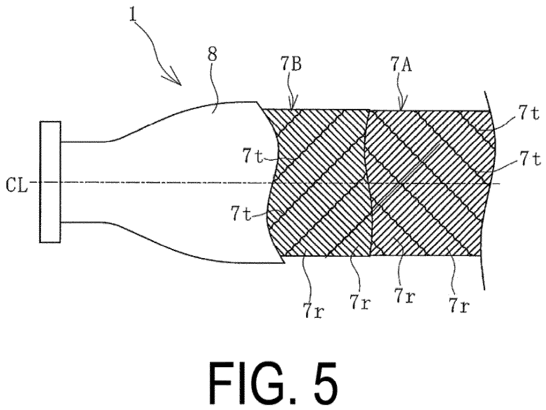

As illustrated in FIG. 5, the auxiliary reinforcing layers 7A to 7D can have a cord fabric structure in which transverse cords 7t weaving up and down to traverse the plurality of reinforcing cords 7r bunched side by side are disposed in the longitudinal direction of the reinforcing cords 7r at intervals.

The cord longitudinal direction strength of the auxiliary reinforcing layer group 7 (cord longitudinal direction strength per unit width of one ply) is set to not less than 250 kg/ply·cm and not greater than 900 kg/ply·cm. When the strength is less than 250 kg/ply·cm, it is difficult to sufficiently absorb the impact force when the main reinforcing layer group 4 is damaged. On the other hand, when the strength is greater than 900 kg/ply·cm, the strength of the auxiliary reinforcing layer group 7 is excessive, and the weight of the marine hose 1 becomes excessive. Note that the main reinforcing layer group 4 has a reinforcing cord longitudinal direction strength equal to or greater than that of the auxiliary reinforcing layer group 7.

In the so-called double carcass type marine hose, an outer reinforcing layer group (outer carcass layer group) is disposed on the outer circumferential side of the main reinforcing layer group. In a double carcass type floating hose, the outer reinforcing layer group (outer carcass layer group) is disposed on the inner circumferential side of the buoyant layer. However, since the marine hose 1 does not have the above-described double carcass type structure, the marine hose 1 falls under the category of a so-called single carcass type.

In the marine hose 1, the buoyant layer 6 is interposed between the main reinforcing layer group 4 and the auxiliary reinforcing layer group 7. Since the buoyant layer 6 is formed of a material containing bubbles (small air) such as sponge to exhibit large buoyancy, the buoyant layer 6 has a considerable impact absorption performance. Thus, when the main reinforcing layer group 4 is damaged, the impact force generated by the fluid L flowing through the flow path 1a is absorbed and alleviated to some extent by the buoyant layer 6. As a result, the impact force acting on the auxiliary reinforcing layer group 7 (auxiliary reinforcing layers 7A to 7D) can be reduced.

In this way, the buoyant layer 6 is used not only for obtaining buoyancy but also as a cushioning material for absorbing the impact force. With this devising, in this marine hose 1, sufficient impact absorption performance can be ensured while reducing the impact force acting on the auxiliary reinforcing layer group 7. Accordingly, there is no need to make the auxiliary reinforcing layer group 7 to excessively strong specification, and the number of layers of the auxiliary reinforcing layers 7A to 7D can also be reduced. As a result, the marine hose 1 can be made light weight.

As in the above-described embodiment, in a case where the auxiliary reinforcing layer group 7 is disposed between the buoyant layer 6 and the cover layer 8, the impact absorption effect by the buoyant layer 6 can be utilized to the maximum extent. In the embodiment, the auxiliary reinforcing layer group 7 is layered on the outer circumferential surface of the buoyant layer 6 and is disposed only between the buoyant layer 6 and the cover layer 8, but can also be disposed at another position.

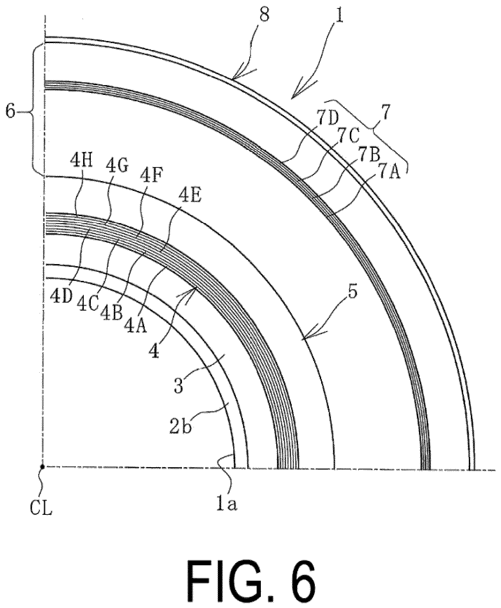

For example, as illustrated in FIG. 6, the auxiliary reinforcing layer group 7 can be disposed only inside the buoyant layer 6. In the case where the auxiliary reinforcing layer group 7 is disposed inside the buoyant layer 6, the diameters of the cylindrical auxiliary reinforcing layers 7A to 7D are smaller compared to those in the case where the auxiliary reinforcing layer group 7 is disposed between the buoyant layer 6 and the cover layer 8, and accordingly the total area decreases. Thus, this is advantageous in terms of making the marine hose 1 light weight.

In a case of a specification in which the auxiliary reinforcing layer group 7 is disposed inside the buoyant layer 6, the auxiliary reinforcing layer group 7 is preferably at or on the outer circumferential side of a position of a half of the layer thickness of the buoyant layer 6. When the auxiliary reinforcing layer group 7 is disposed on the inner circumferential side of the position of the half of the layer thickness of the buoyant layer 6, the effect of reducing the impact force acting on the auxiliary reinforcing group 7 is decreased.

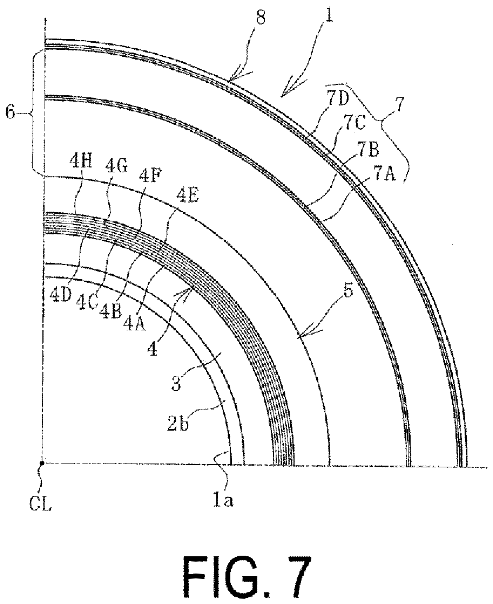

As illustrated in FIG. 7, the auxiliary reinforcing layer group 7 can also be disposed between the buoyant layer 6 and the cover layer 8 and inside the buoyant layer 6. In the case of this specification, the auxiliary reinforcing layer group 7 disposed between the buoyant layer 6 and the cover layer 8 can be reduced in reinforcing strength (reduced in the number of layers, reduced in the strength of the reinforcing cords, or the like) more than that of the auxiliary reinforcing layer group 7 disposed inside the buoyant layer 6.

### Examples

Tests are performed to confirm impact absorption performance of marine hoses when a main reinforcing layer group is damaged by loading an internal pressure to a flow path, by using marine hoses having structures identical to those illustrated in FIGS. 1 to 4 (Examples 1 and 2) and double carcass type marine hoses, each of which omits an auxiliary reinforcing layer group of the marine hose and disposes an outer carcass layer group between a body wire layer and a buoyant layer (Comparative Examples 1 and 2). The loaded internal pressure when damaged is about not less than 60 bar and not higher than 65 bar. The specification and test result of each of the marine hoses are shown in Table 1. Examples 1 and 2 and Comparative Examples 1 and 2 differ only in the presence of the auxiliary reinforcing layer group and the outer carcass layer group and in the specifications of the reinforcing layers (carcass layers) that configure these layer groups as shown in Table 1, and other specifications are substantially identical. The strength of the reinforcing (carcass layer) layer group strength in Table 1 is the cord longitudinal direction strength. In addition, the impact absorption performance is evaluated by observing the damaged state of the marine hose, and in a case where the marine hose is evaluated as having sufficient impact absorption performance, it is indicated by O, and in a case where the marine hose is evaluated as not having enough impact absorption performance, it is indicated by X.

**[Table 1]**

| | Example | | Comparative Example | |
|---|---|---|---|---|
| | 1 | 2 | 1 | 2 |
| Strength of reinforcing (carcass) layer group | 332 | 892 | 215 | 1141 |
| (kg/ply · cm) | | | | |
| Number of layers of reinforcing (carcass) layers | 6 | 2 | 10 | 2 |
| Material of reinforcing (carcass) cord | Nylon | Steel cord | Polyester | Aramid |
| Impact absorption performance | ○ | ○ | ○ | X |

As can be seen from the results shown in Table 1, Examples 1 and 2, compared to Comparative Examples 1 and 2, have high impact absorption performance while reducing the number of layers of the reinforcing layers of the auxiliary reinforcing layer group more than the number of layers of the reinforcing layers (carcass layers) that configure the outer carcass layer group.

### Reference Signs List

1 Marine hose
1a Flow path
2 Connecting end portion
2a Flange
2b Nipple
2c Fixing ring
3 Inner surface rubber layer
4 Main reinforcing layer group
4A, 4B, 4C, 4D, 4E, 4F, 4G, 4H Main reinforcing layer
4w Nipple wire
5 Body wire layer
5r Reinforcing wire
5w Nipple wire
6 Buoyant layer
7 Auxiliary reinforcing layer group
7A, 7B, 7C, 7D Auxiliary reinforcing layer
7r Reinforcing cord
7t Transverse cord
7w Nipple wire
8 Cover layer
L Fluid

## Claims

1. A marine hose (1) of a floating type, comprising:
a main reinforcing layer group (4); and
a buoyant layer (6),
the main reinforcing layer group (4) and the buoyant layer (6) being layered in order from an inner circumferential side between an inner surface rubber layer (3) and a cover layer (8), and
one connecting end portion (2) disposed at one longitudinal end portion of the hose and another connecting end portion (2) disposed at another longitudinal end portion of the hose, and
the one connecting end portion (2) includes one nipple (2b) extending in the longitudinal direction of the hose and one flange (2a) joined to one end of the one nipple (2b) in the longitudinal direction, and the another connecting end portion (2) includes another nipple (2b) extending in the longitudinal direction of the hose and another flange (2a) joined to one end of the another nipple (2b) in the longitudinal direction,
one end portion of the main reinforcing layer group (4) is fixed to the one nipple (2b) and another end portion of the main reinforcing layer (4) is fixed to the another nipple (2b),
**characterised in that** the marine hose further comprises an auxiliary reinforcing layer group (7) that assists the main reinforcing layer group (4), being layered in a position between the buoyant layer (6) and the cover layer (8),
one end portion of the auxiliary reinforcing layer group (7) is fixed to the one nipple (2b) and another end portion of the auxiliary reinforcing layer (7) is fixed to the another nipple (2b),
wherein the auxiliary reinforcing layer group (7) has a multilayer structure with auxiliary reinforcing layers (7A, 7B, 7C, 7D) formed by bunching a plurality of rubber coated reinforcing cords (7r) side by side and
a cord longitudinal direction strength of the auxiliary reinforcing layer group (7) is not less than 250 kg/ply·cm and not greater than 900 kg/ply·cm.

2. The marine hose (1) according to claim 1, wherein another one of the auxiliary reinforcing layer group (7) is embedded in the buoyant layer (6).

3. The marine hose (1) according to claim 1 or 2, wherein the reinforcing cord (7r) is a steel cord

## Patentansprüche

1. Ein schwimmender Marineschlauch (1), der Folgendes aufweist: eine Hauptverstärkungsschichtgruppe (4); und eine schwimmfähige Schicht (6), wobei die Hauptverstärkungsschichtgruppe (4) und die schwimmfähige Schicht (6) in der Reihenfolge von einer inneren Umfangsseite zwischen einer inneren Oberflächengummischicht (3) und einer Deckschicht (8) geschichtet sind, und ein Verbindungsabschnitt (2) an einem Endabschnitt in Längsrichtung des Schlauchs angeordnet ist und ein anderer Verbindungsabschnitt (2) an einem anderen Endabschnitt in Längsrichtung des Schlauchs angeordnet ist, und der eine Verbindungsendabschnitt (2) einen Nippel (2b) aufweist, der sich in der Längsrichtung des Schlauches erstreckt, und einen Flansch (2a), der mit einem Ende des einen Nippels (2b) in der Längsrichtung verbunden ist, und der andere Verbindungsendabschnitt (2) einen anderen Nippel (2b) aufweist, der sich in der Längsrichtung des Schlauches erstreckt, und einen anderen Flansch (2a), der mit einem Ende des anderen Nippels (2b) in der Längsrichtung verbunden ist, ein Endabschnitt der Hauptverstärkungsschichtgruppe (4) an dem einen Nippel (2b) befestigt ist und ein anderer Endabschnitt der Hauptverstärkungsschicht (4) an dem anderen Nippel (2b) befestigt ist, **dadurch gekennzeichnet, dass** der Marineschlauch ferner umfasst: eine Hilfsverstärkungsschichtgruppe (7), die die Hauptverstärkungsschichtgruppe (4) unterstützt, wobei sie in einer Position zwischen der schwimmfähigen Schicht (6) und der Abdeckung (8) geschichtet ist, ein Endabschnitt der Hilfsverstärkungsschichtgruppe (7) an dem einen Nippel (2b) befestigt ist und ein anderer Endabschnitt der Hilfsverstärkungsschicht (7) an dem anderen Nippel (2b) befestigt ist, wobei die Hilfsverstärkungsschichtgruppe (7) eine mehrschichtige Struktur mit Hilfsverstärkungsschichten (7A, 7B, 7C, 7D) aufweist, die durch Bündelung einer Vielzahl von gummibeschichteten Verstärkungskorden (7r) nebeneinander gebildet wird, und eine Kordlängsrichtungsfestigkeit der Hilfsverstärkungsschichtgruppe (7) nicht weniger als 250 kg/ply·cm und nicht mehr als 900 kg/ply·cm beträgt.

2. Der Marineschlauch (1) nach Anspruch 1, wobei eine weitere der Hilfsverstärkungsschichtgruppe (7) in die schwimmfähige Schicht (6) eingebettet ist.

3. Der Marineschlauch (1) nach Anspruch 1 oder 2, wobei der Verstärkungskord (7r) ein Stahlkord ist.

## Revendications

1. Tuyau souple marin (1) de type flottant, comprenant :
un groupe de couches principales de renforcement (4) ; et
une couche flottante (6),
le groupe de couches principales de renforcement (4) et la couche flottante (6) étant disposés en couches dans l'ordre à partir d'un côté circonférentiel interne entre une couche de caoutchouc de surface interne (3) et une couche de couverture (8), et
une première partie d'extrémité de raccordement (2) disposée au niveau d'une première partie d'extrémité longitudinale du tuyau souple, et une autre partie d'extrémité de raccordement (2) disposée au niveau d'une autre partie d'extrémité longitudinale du tuyau souple, et
la première partie d'extrémité de raccordement (2) comprend un premier embout (2b) s'étendant dans la direction longitudinale du tuyau souple et une première bride (2a) reliée à une première extrémité du premier embout (2b) dans la direction longitudinale, et l'autre partie d'extrémité de raccordement (2) comprend un autre embout (2b) s'étendant dans la direction longitudinale du tuyau souple et une autre bride (2a) reliée à une première extrémité de l'autre embout (2b) dans la direction longitudinale,
une première partie d'extrémité du groupe de couches principales de renforcement (4) est fixée au premier embout (2b) et une autre partie d'extrémité de la couche principale de renforcement (4) est fixée à l'autre embout (2b),
**caractérisé en ce que** le tuyau souple marin comprend en outre
un groupe de couches auxiliaires de renforcement (7) qui assiste le groupe de couches principales de renforcement (4), étant disposé en couches dans une position entre la couche flottante (6) et la couche de couverture (8),
une première partie d'extrémité du groupe de couches auxiliaires de renforcement (7) est fixée au premier embout (2b) et une autre partie d'extrémité de la couche auxiliaire de renforcement (7) est fixée à l'autre embout (2b),
dans lequel le groupe de couches auxiliaires de renforcement (7) a une structure multicouche avec des couches auxiliaires de renforcement (7A, 7B, 7C, 7D) formées par le groupement côte à côte d'une pluralité de câbles de renforcement revêtus de caoutchouc (7r) et
une résistance dans la direction longitudinale des câbles du groupe de couches auxiliaires de renforcement (7) est supérieure ou égale à 250 kg/ply·cm et inférieure ou égale à 900 kg/ply·cm.

2. Tuyau souple marin (1) selon la revendication 1, dans lequel une autre du groupe de couches auxiliaires de renforcement (7) est incorporée dans la couche flottante (6).

3. Tuyau souple marin (1) selon la revendication 1 ou 2, dans lequel le câble de renforcement (7r) est un câble en acier.
